(19) Europäisches Patentamt
European Patent Office
Office européen des brevets

(11) **EP 3 604 421 A1**

(12) **EUROPEAN PATENT APPLICATION**
published in accordance with Art. 153(4) EPC

(43) Date of publication:
**05.02.2020 Bulletin 2020/06**

(51) Int Cl.:
*C08L 21/00* [(2006.01)]   *B60C 1/00* [(2006.01)]
*C08L 97/00* [(2006.01)]

(21) Application number: **18771421.7**

(22) Date of filing: **14.03.2018**

(86) International application number:
**PCT/JP2018/009905**

(87) International publication number:
**WO 2018/173870 (27.09.2018 Gazette 2018/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2017 JP 2017056162**

(71) Applicant: **Sumitomo Rubber Industries, Ltd.**
**Kobe-shi, Hyogo 651-0072 (JP)**

(72) Inventors:
• **MIYAZAKI, Sumiko**
**Kobe-shi**
**Hyogo 651-0072 (JP)**
• **SATO, Daisuke**
**Kobe-shi**
**Hyogo 651-0072 (JP)**

(74) Representative: **TBK**
**Bavariaring 4-6**
**80336 München (DE)**

(54) **TREAD RUBBER COMPOSITION FOR STUDLESS TIRES**

(57)    The present invention provides a tread rubber composition for studless winter tires which provides good snow and ice performance, and a studless winter tire containing the tread rubber composition. The present invention relates to a tread rubber composition for studless winter tires, containing a rubber component, and a lignin derivative particle having a degree of sulfonation of 1.5 to 8.0/OCH$_3$.

**Description**

TECHNICAL FIELD

The present invention relates to a tread rubber composition for studless winter tires, and a studless winter tire containing the tread rubber composition.

BACKGROUND ART

Studded tires or tire chains have been used for driving on snowy and icy roads. However, since they may cause environmental problems such as dust pollution, studless winter tires have been developed as alternative tires for driving on snowy and icy roads. The materials and structure of the studless winter tires are designed to allow the tires to be used on snowy roads with rougher surfaces than normal roads.

For example, Patent Literature 1 discloses a technique of adding eggshell powder to a tread compound to provide effects such as scratching the snowy road surface and draining water through the fine pores of the eggshell powder, thereby improving ice performance. However, it is also desirable to provide other techniques.

CITATION LIST

PATENT LITERATURE

Patent Literature 1: JP 2006-282806 A

SUMMARY OF INVENTION

TECHNICAL PROBLEM

In this context, the present invention aims to provide a tread rubber composition for studless winter tires which provides good snow and ice performance, and a studless winter tire containing the tread rubber composition.

SOLUTION TO PROBLEM

The present invention relates to a tread rubber composition for studless winter tires, containing a rubber component, and a lignin derivative particle having a degree of sulfonation of 1.5 to 8.0/$OCH_3$.

The lignin derivative particle is preferably a composition having a sugar content of 5% by mass or lower.

The lignin derivative particle preferably has an average particle size of 0.1 to 100 $\mu$m.

The present invention also relates to a studless winter tire, including a tread formed from the rubber composition.

ADVANTAGEOUS EFFECTS OF INVENTION

The tread rubber composition for studless winter tires of the present invention contains a rubber component and a lignin derivative particle having a predetermined degree of sulfonation. With such a tread rubber composition, it is possible to provide studless winter tires with good snow and ice performance.

DESCRIPTION OF EMBODIMENTS

The tread rubber composition for studless winter tires of the present invention contains a rubber component and a lignin derivative particle having a predetermined degree of sulfonation.

When the present specific lignin derivative particle having a predetermined degree of sulfonation is added to form a tread with the particle protruding from the surface thereof, the particle on the tread surface may come into contact with and dissolve in water. This results in formation of recesses (holes) on the tread surface which provide both a scratching effect and a water draining effect. Therefore, due to these effects, good snow and ice performance is provided in the present invention.

Further, the effects such as water draining effect are significant, particularly when compared to the case where the lignin derivative particle is replaced by a magnesium sulfate particle, and thus the present invention has a synergistic effect in improving snow and ice performance.

Examples of the rubber component include isoprene-based rubbers, polybutadiene rubber (BR), styrene-butadiene rubber (SBR), styrene-isoprene-butadiene rubber (SIBR), ethylene-propylene-diene rubber (EPDM), chloroprene rubber (CR), acrylonitrile butadiene rubber (NBR), and butyl-based rubbers. From the standpoint of snow and ice performance, BR or isoprene-based rubbers are preferred among these.

Any BR may be used. Examples include high-cis BR such as BR730 and BR51 both available from JSR Corporation, BR1220 available from Zeon Corporation, and BR130B, BR150B, and BR710 all available from Ube Industries, Ltd.; and low-cis BR such as BR1250H available from Zeon Corporation. These may be used alone, or two or more of these may be used in combination.

The BR preferably has a cis content of 80% by mass or higher, more preferably 85% by mass or higher, still more preferably 90% by mass or higher, particularly preferably 95% by mass or higher. With such BR, better snow and ice performance can be obtained.

The cis content herein is determined by infrared absorption spectrum analysis.

The amount of the BR based on 100% by mass of the rubber component is preferably 10% by mass or more, more preferably 30% by mass or more, still more preferably 50% by mass or more. The amount is also preferably 70% by mass or less, more preferably 60% by mass or less. When the amount is adjusted within the range indicated above, good snow and ice performance tends to be obtained.

Examples of the isoprene-based rubbers include synthetic polyisoprene rubber (IR), natural rubber (NR), and modified natural rubbers. The term "NR" encompasses deproteinized natural rubber (DPNR) and highly purified natural rubber (HPNR). Examples of the modified natural rubbers include epoxidized natural rubber (ENR), hydrogenated natural rubber (HNR), and grafted natural rubber. The NR may be one commonly used in the tire industry, such as SIR20, RSS#3, or TSR20. Among these, NR or IR is preferred, with NR being more preferred.

The amount (total amount) of the isoprene-based rubber (s) based on 100% by mass of the rubber component is preferably 20% by mass or more, more preferably 40% by mass or more. The amount is preferably 85% by mass or less, more preferably 70% by mass or less, still more preferably 60% by mass or less. When the amount is adjusted within the range indicated above, good snow and ice performance tends to be obtained.

The combined amount of the isoprene-based rubber(s) and BR based on 100% by mass of the rubber component is preferably 50% by mass or more, more preferably 80% by mass or more, still more preferably 90% by mass or more, and may be 100% by mass.

The rubber composition contains a specific lignin derivative particle. This provides the above-mentioned effects to significantly (synergistically) improve snow and ice performance.

The lignin derivative constituting the lignin derivative particle may suitably be, for example, a lignosulfonic acid, a lignosulfonate, or a composition containing a sugar in addition to any of these components. The lignin derivative may be prepared either by sulfite pulping or kraft pulping.

Examples of the lignosulfonate include alkali metal salts, alkaline earth metal salts, ammonium salts, and alcohol amine salts of lignosulfonic acid. Preferred among these are alkali metal salts (e.g., potassium or sodium salts) and alkaline earth metal salts (e.g., calcium, magnesium, lithium, or barium salts) of lignosulfonic acid.

In the case where the lignin derivative is a composition (mixture) containing a sugar in addition to a lignosulfonic acid and/or lignosulfonate, a lower sugar content is better from the stand point of snow and ice performance, and the sugar content based on 100% by mass of the composition is preferably 5% by mass or lower, more preferably 1% by mass or lower, still more preferably 0.1% by mass or lower.

The sugar may have any number of carbon atoms and may be a monosaccharide, oligosaccharide, or polysaccharide. Examples of the monosaccharide include trioses such as aldotriose and ketotriose; tetroses such as erythrose and threose; pentoses such as xylose and ribose; hexoses such as mannose, allose, altrose, and glucose; and heptoses such as sedoheptulose. Examples of the oligosaccharide include disaccharides such as sucrose and lactose; trisaccharides such as raffinose and melezitose; tetrasaccharides such as acarbose and stachyose; and higher oligosaccharides such as xylooligosaccharide and cellooligosaccharide. Examples of the polysaccharide include glycogen, starch (amylose, amylopectin), cellulose, hemicellulose, dextrin, and glucan.

The lignin derivative particle (the lignin derivative constituting the particle) has a degree of sulfonation of 1.5 to $8.0/OCH_3$. Specifically, the lignin derivative includes a lignosulfonic acid and/or lignosulfonate in which lignin and/or a degradation product thereof is at least partially substituted with a sulfo group (sulfone group). The sulfo group of the lignosulfonic acid may be unionized, or the hydrogen atom of the sulfo group may be replaced by an ion such as a metal ion. The degree of sulfonation is preferably 3.0 to $6.0/OCH_3$. When the degree of sulfonation is adjusted within the range indicated above, good snow and ice performance can be obtained.

The degree of sulfonation of the lignin derivative particle (the lignin derivative constituting the particle) refers to the ratio of introduced sulfo groups calculated by the following equation:

Degree of sulfonation (/OCH$_3$) =

(S atoms (mol) of the sulfone groups in the lignin

derivative)/(methoxyl groups (mol) in the lignin derivative).

From the standpoint of snow and ice performance, the lignin derivative particle preferably has an average particle size of 0.1 to 100 $\mu$m, more preferably 1 to 80 $\mu$m, still more preferably 5 to 70 $\mu$m. The average particle size in the present invention refers to the number average particle size measured with a transmission electron microscope.

The amount of the lignin derivative particle per 100 parts by mass of the rubber component is preferably 2 parts by mass or more, more preferably 7 parts by mass or more, still more preferably 10 parts by mass or more. When the amount is adjusted to not less than the lower limit, good snow and ice performance tends to be obtained. The amount is preferably 30 parts by mass or less, more preferably 20 parts by mass or less, still more preferably 15 parts by mass or less. When the amount is adjusted to not more than the upper limit, good rubber physical properties such as abrasion resistance tend to be obtained.

The rubber composition preferably contains carbon black. The incorporation of carbon black provides a reinforcing effect, so that the effects of the present invention can be better achieved.

Examples of usable carbon black include N134, N110, N220, N234, N219, N339, N330, N326, N351, N550, and N762. These may be used alone, or two or more of these may be used in combination.

The carbon black preferably has a nitrogen adsorption specific surface area (N$_2$SA) of 50 m$^2$/g or more, more preferably 90 m$^2$/g or more. When the N$_2$SA is adjusted to not less than the lower limit, sufficient snow and ice performance tends to be obtained. The N$_2$SA is preferably 180 m$^2$/g or less, more preferably 130 m$^2$/g or less. When the N$_2$SA is adjusted to not more than the upper limit, good dispersibility tends to be obtained.

The N$_2$SA of the carbon black is determined in accordance with JIS K 6217-2:2001.

The carbon black preferably has a dibutyl phthalate oil absorption (DBP) of 50 mL/100 g or more, more preferably 100 mL/100 g or more. When the DBP is adjusted to not less than the lower limit, sufficient snow and ice performance tends to be obtained. The DBP is preferably 200 mL/100 g or less, more preferably 135 mL/100 g or less. When the DBP is adjusted to not more than the upper limit, good processability tends to be obtained.

The DBP of the carbon black is measured in accordance with JIS K6217-4:2001.

The amount of the carbon black per 100 parts by mass of the rubber component is preferably 10 parts by mass or more, more preferably 20 parts by mass or more. When the amount is adjusted to not less than the lower limit, sufficient snow and ice performance tends to be obtained. The amount is preferably 80 parts by mass or less, more preferably 60 parts by mass or less, still more preferably 40 parts by mass or less. When the amount is adjusted to not more than the upper limit, good dispersibility tends to be obtained.

The rubber composition preferably contains silica. The incorporation of silica provides a reinforcing effect, so that the effects of the present invention can be better achieved. Examples of the silica include dry silica (anhydrous silica) and wet silica (hydrous silica) . Wet silica is preferred among these because it contains a large number of silanol groups.

The silica preferably has a nitrogen adsorption specific surface area (N$_2$SA) of 40 m$^2$/g or more, more preferably 70 m$^2$/g or more, still more preferably 110 m$^2$/g or more. When the N$_2$SA is adjusted to not less than the lower limit, sufficient snow and ice performance tends to be obtained. The N$_2$SA of the silica is preferably 220 m$^2$/g or less, more preferably 200 m$^2$/g or less. When the N$_2$SA is adjusted to not more than the upper limit, good dispersibility tends to be obtained.

The N$_2$SA of the silica is measured by the BET method in accordance with ASTM D3037-93.

The amount of the silica per 100 parts by mass or the rubber component is preferably 10 parts by mass or more, more preferably 20 parts by mass or more. When the amount is adjusted to not less than the lower limit, sufficient snow and ice performance tends to be obtained. The amount is preferably 80 parts by mass or less, more preferably 60 parts by mass or less, still more preferably 40 parts by mass or less. When the amount is adjusted to not more than the upper limit, good dispersibility tends to be obtained.

The rubber composition, when containing silica, preferably further contains a silane coupling agent.

Any silane coupling agent conventionally used in combination with silica in the rubber industry can be used. Examples include sulfide silane coupling agents such as bis(3-triethoxysilylpropyl)disulfide, mercapto silane coupling agents such as 3-mercaptopropyltrimethoxysilane, vinyl silane coupling agents such as vinyltriethoxysilane, amino silane coupling agents such as 3-aminopropyltriethoxysilane, glycidoxy silane coupling agents such as $\gamma$-glycidoxypropyltriethoxysilane, nitro silane coupling agents such as 3-nitropropyltrimethoxysilane, and chloro silane coupling agents such as 3-chloropropyltrimethoxysilane. Among these, sulfide silane coupling agents are preferred, with bis(3-triethoxysilylpropyl)disulfide being more preferred.

The amount of the silane coupling agent per 100 parts by mass of the silica is preferably 1 part by mass or more, more preferably 3 parts by mass or more. When the amount is adjusted to not less than the lower limit, sufficient snow and ice performance tends to be obtained. The amount of the silane coupling agent is also preferably 15 parts by mass or less, more preferably 10 parts by mass or less. When the amount is adjusted to not more than the upper limit, an effect commensurate with the amount tends to be produced.

The rubber composition preferably contains an oil. The incorporation of an oil reduces the rubber hardness, thereby providing better snow and ice performance.

The oil may be, for example, a process oil, a vegetable oil, or a mixture thereof. Examples of the process oil include paraffinic process oils, naphthenic process oils, and aromatic process oils (aromatic oils). Examples of the vegetable oil include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Aromatic oils are preferred among these.

The amount of the oil per 100 parts by mass of the rubber component is preferably 5 parts by mass or more, more preferably 10 parts by mass or more, still more preferably 20 parts by mass or more. When the amount is adjusted to not less than the lower limit, sufficient snow and ice performance tends to be obtained. The amount of the oil is also preferably 80 parts by mass or less, more preferably 60 parts by mass or less, still more preferably 50 parts by mass or less. When the amount is adjusted to not more than the upper limit, rubber mechanical properties tend to be ensured.

In addition to the above-mentioned components, the rubber composition may appropriately contain compounding agents commonly used in the tire industry. Examples of such materials include waxes, stearic acid, zinc oxide, antioxidants, vulcanizing agents such as sulfur, and vulcanization accelerators.

The sulfur may be a commercial product available from, for example, Tsurumi Chemical Industry Co., Ltd., Karuizawa Sulfur Co., Ltd., Shikoku Chemicals Corporation, Flexsys, Nippon Kanryu Industry Co., Ltd., or Hosoi Chemical Industry Co., Ltd.

The amount of the sulfur per 100 parts by mass of the rubber component in the rubber composition is preferably 0.5 parts by mass or more, more preferably 0.8 parts by mass or more. The amount is also preferably 10 parts by mass or less, more preferably 5 parts by mass or less, still more preferably 3 parts by mass or less.

Examples of the vulcanization accelerators include sulfenamide, thiazole, thiuram, thiourea, guanidine, dithiocarbamate, aldehyde-amine or aldehyde-ammonia, imidazoline, and xanthate vulcanization accelerators. These vulcanization accelerators may be used alone, or two or more of these may be used in combination. Among these, sulfenamide vulcanization accelerators are preferred. More preferably, sulfenamide vulcanization accelerators are combined with guanidine vulcanization accelerators such as diphenylguanidine.

Examples of the sulfenamide vulcanization accelerators include N-tert-butyl-2-benzothiazolylsulfenamide (TBBS), N-cyclohexyl-2-benzothiazolylsulfenamide (CBS), and N,N-dicyclohexyl-2-benzothiazolylsulfenamide (DCBS). CBS is preferred among these. More preferably, CBS is combined with guanidine vulcanization accelerators such as diphenylguanidine.

The amount of the vulcanization accelerator(s) per 100 parts by mass of the rubber component in the rubber composition is preferably 1 part by mass or more, more preferably 3 parts by mass or more. The amount is also preferably 10 parts by mass or less, more preferably 7 parts by mass or less.

The rubber composition can be prepared by common methods . Specifically, the rubber composition may be prepared, for example, by kneading the above-mentioned components in a Banbury mixer, a kneader, an open roll mill, or other devices, and vulcanizing the kneaded mixture. The rubber composition is for use in treads (monolayer treads, or cap treads of multilayer treads) of studless winter tires.

The studless winter tire of the present invention can be produced using the rubber composition by usual methods. Specifically, the unvulcanized rubber composition containing the above-mentioned components may be extruded into the shape of a tread (e.g., a cap tread) and assembled with other tire components on a tire building machine in a usual manner to build an unvulcanized tire, which may then be heated and pressurized in a vulcanizer to produce a studless winter tire. The studless winter tire of the present invention is suitable for use as a studless winter tire for passenger vehicles.


EXAMPLES

The present invention is specifically described with reference to examples, but the present invention is not limited to the examples.

The chemicals used in the examples and comparative examples are described below

NR: RSS#3
BR: high-cis BR (cis content: 96% by mass)
SBR: Nipol SBR1502 available from Zeon Corporation
Carbon black: $N_2SA$ 114 $m^2/g$, DBP 114 mL/100 g

Silica: N$_2$SA 175 m$^2$/g

Silane coupling agent: bis(3-triethoxysilylpropyl)-disulfide)

Lignin derivative particle 1: lignosulfonic acid (degree of sulfonation: 5.0/OCH$_3$ (within the scope of the present specific particle), sugar content: 0% by mass, average particle size: 50 $\mu$m)

Lignin derivative particle 2: lignosulfonic acid (degree of sulfonation: 5.0/OCH$_3$ (within the scope of the present specific particle), sugar content: 0% by mass, average particle size: 10 $\mu$m)

Lignin derivative particle 3: lignosulfonic acid (degree of sulfonation: 1.0/OCH$_3$ (outside the scope of the present specific particle), sugar content: 5% by mass, average particle size: 10 $\mu$m)

Lignin derivative particle 4: lignosulfonate (sodium salt, degree of sulfonation: 5.0/OCH$_3$ (within the scope of the present specific particle), sugar content: 0% by mass, average particle size: 50 $\mu$m)

Magnesium sulfate particle: average particle size 5 $\mu$m

Oil: aromatic oil

Wax: petroleum wax

Zinc oxide: zinc oxide #1

Stearic acid: a commercial product

Antioxidant: N-(1,3-dimethylbutyl)-N'-phenyl-p-phenylenediamine

Sulfur: powdered sulfur

Vulcanization accelerator 1: N-cyclohexyl-2-benzothiazolylsulfenamide

Vulcanization accelerator 2: N,N'-diphenylguanidine

(Examples and Comparative Examples)

The materials other than the sulfur and vulcanization accelerators in the amounts shown in Table 1 were kneaded using a 1.7 L Banbury mixer (Kobe Steel, Ltd.) at about 150°C for 5 minutes to give a kneaded mixture. Then, the sulfur and vulcanization accelerators in the amounts shown in Table 1 were added to the kneaded mixture, and they were kneaded using an open roll mill at about 80°C for 3 minutes to give an unvulcanized rubber composition. The unvulcanized rubber composition was formed into a cap tread shape and assembled with other tire components on a tire building machine to build an unvulcanized tire. The unvulcanized tire was vulcanized at 170°C for 15 minutes to prepare a test tire (size: 195/65R15).

The test tires prepared as above were evaluated as follows. Tables 1 and 2 show the results. Comparative Examples 1 and 4 are used as standards of comparison in Tables 1 and 2, respectively.

(Snow and ice performance)

Each set of test tires was mounted on a front-engine, rear-wheel-drive car of 2,000 cc displacement made in Japan. The car was driven on ice and snow under the conditions described below to evaluate snow and ice performance. Specifically, for evaluation of snow and ice performance, the car was driven on ice or snow, and the brakes that lock up were applied at 30 km/h. Then, the stopping distance (brake stopping distance on ice or snow), which was the distance required for the car to stop after the braking, was measured and expressed as an index using the equation below. A higher index indicates better grip performance on snow and ice.

```
(Braking performance index) = (Brake stopping distance of
standard comparative example)/(Brake stopping distance of each
formulation example) × 100
```

|  | (on ice) | (on snow) |
|---|---|---|
| Test place: | Test track in Nayoro, Hokkaido | Test track in Nayoro, Hokkaido |
| Temperature: | -6°C to -1°C | -10°C to -2°C |

[Table 1]

|  | | Example | | | | Comparative Example | | |
|---|---|---|---|---|---|---|---|---|
|  | | 1 | 2 | 3 | 4 | 1 | 2 | 3 |
| Amount (parts by mass) | NR | 50 | 50 | 50 | 50 | 50 | 50 | 50 |
| | BR | 50 | 50 | 50 | 50 | 50 | 50 | 50 |
| | Carbon black | 30 | 30 | 30 | 30 | 30 | 30 | 30 |
| | Silica | 30 | 30 | 30 | 30 | 30 | 30 | 30 |
| | Silane coupling agent | 2 | 2 | 2 | 2 | 2 | 2 | 2 |
| | Lignin derivative particle 1 | 10 | 15 | – | – | – | – | – |
| | Lignin derivative particle 2 | – | – | 10 | – | – | – | – |
| | Lignin derivative particle 3 | – | – | – | – | – | 10 | – |
| | Lignin derivative particle 4 | – | – | – | 10 | – | – | – |
| | Magnesium sulfate particle | – | – | – | – | – | – | 10 |
| | Oil | 40 | 40 | 40 | 40 | 40 | 40 | 40 |
| | Wax | 2 | 2 | 2 | 2 | 2 | 2 | 2 |
| | Zinc oxide | 2 | 2 | 2 | 2 | 2 | 2 | 2 |
| | Stearic acid | 2 | 2 | 2 | 2 | 2 | 2 | 2 |
| | Antioxidant | 2 | 2 | 2 | 2 | 2 | 2 | 2 |
| | Sulfur | 1.5 | 1.5 | 1.5 | 1.5 | 1.5 | 1.5 | 1.5 |
| | Vulcanization accelerator 1 | 2 | 2 | 2 | 2 | 2 | 2 | 2 |
| | Vulcanization accelerator 2 | 2 | 2 | 2 | 2 | 2 | 2 | 2 |
| Evaluation | Snow and ice performance | 120 | 120 | 120 | 120 | 100 | 102 | 102 |

As shown in Table 1, the examples containing the lignin derivative particle 1, 2, or 4 having a predetermined degree of sulfonation exhibited better snow and ice performance than the comparative examples containing no lignin derivative or containing the lignin derivative 3 falling outside the predetermined range. It is also demonstrated that they exhibited significantly improved snow and ice performance as compared to the comparative example containing a magnesium sulfate particle, and thus a synergistic improving effect was observed.

[Table 2]

| | | Example | Comparative Example |
|---|---|---|---|
| | | 5 | 4 |
| Amount (parts by mass) | SBR | 50 | 50 |
| | BR | 50 | 50 |
| | Carbon black | 30 | 30 |
| | Silica | 30 | 30 |
| | Silane coupling agent | 2 | 2 |
| | Lignin derivative particle 1 | 10 | – |
| | Lignin derivative particle 2 | – | – |
| | Lignin derivative particle 3 | – | – |
| | Lignin derivative particle 4 | – | – |
| | Magnesium sulfate particle | – | – |
| | Oil | 40 | 40 |
| | Wax | 2 | 2 |
| | Zinc oxide | 2 | 2 |
| | Stearic acid | 2 | 2 |
| | Antioxidant | 2 | 2 |
| | Sulfur | 1.5 | 1.5 |
| | Vulcanization accelerator 1 | 2 | 2 |
| | Vulcanization accelerator 2 | 2 | 2 |
| Evaluation | Snow and ice performance | 105 | 100 |

As shown in Tables 1 and 2, when the lignin derivative particle 1 having a predetermined degree of sulfonation was added to a composition containing NR and BR (Example 1 vs. Comparative Example 1), snow and ice performance was significantly (synergistically) improved as compared to when it was added to a composition containing SBR and BR (Example 5 vs. Comparative Example 4).

## Claims

1. A tread rubber composition for studless winter tires, comprising
a rubber component, and
a lignin derivative particle having a degree of sulfonation of 1.5 to $8.0/OCH_3$.

2. The tread rubber composition for studless winter tires according to claim 1,
wherein the lignin derivative particle is a composition having a sugar content of 5% by mass or lower.

3.  The tread rubber composition for studless winter tires according to claim 1 or 2,
    wherein the lignin derivative particle has an average particle size of 0.1 to 100 $\mu$m.

4.  A studless winter tire, comprising a tread formed from the rubber composition according to any one of claims 1 to 3.

<div align="center">

**INTERNATIONAL SEARCH REPORT**

</div>

| International application No. |
| --- |
| PCT/JP2018/009905 |

**A. CLASSIFICATION OF SUBJECT MATTER**
Int.Cl. C08L21/00(2006.01)i, B60C1/00(2006.01)i, C08L97/00(2006.01)i

According to International Patent Classification (IPC) or to both national classification and IPC

**B. FIELDS SEARCHED**

Minimum documentation searched (classification system followed by classification symbols)
Int.Cl. C08L1/00-101/14, B60C1/00, C08K3/00-13/08

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2010-242023 A (TOYO TIRE AND RUBBER CO., LTD.) 28 October 2010, entire specification (Family: none) | 1-4 |
| A | JP 2009-108308 A (TOYO TIRE AND RUBBER CO., LTD.) 21 May 2009, entire specification & US 2009/0099281 A1, entire specification & DE 102008050966 A1 | 1-4 |
| A | JP 2012-219241 A (TOYO TIRE AND RUBBER CO., LTD.) 12 November 2012, entire specification (Family: none) | 1-4 |
| A | JP 2010-248282 A (TOYO TIRE AND RUBBER CO., LTD.) 04 November 2010, entire specification (Family: none) | 1-4 |
| A | JP 2009-114338 A (TOYO TIRE AND RUBBER CO., LTD.) 28 May 2009, entire specification (Family: none) | 1-4 |
| A | JP 2016-113560 A (TOYO TIRE AND RUBBER CO., LTD.) 23 June 2016, entire specification & US 2016/0168364 A1, entire specification & DE 102015224066 A1 & CN 105694125 A | 1-4 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 May 2018 (23.05.2018) | 05 June 2018 (05.06.2018) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006282806 A